# EUROPEAN PATENT APPLICATION

(11) **EP 3 702 260 A1**
(43) Date of publication of application: **02.09.2020**
(21) Application number: 20151857.8
(22) Date of filing: 14.01.2020
(51) Int. Cl.: B62M 6/55, B62M 11/02, B62M 6/50

(54) **DRIVETRAIN FOR ELECTRIC BIKE**

(30) Priority: 27.02.2019 CN 201910144919
(71) Applicant: Unique Product & Design Co., Ltd., Tainan City 710 (TW)
(72) Inventor: Cheng, Chih-Ching, 710 Tainan City (TW)
(74) Representative: Michalski Hüttermann & Partner Patentanwälte mbB

(57) **Abstract**

A drivetrain (10) of an electric bike (1) is provided. The drivetrain includes an outer rotor type motor (11), a shaft gear (13), a crankshaft (15) and a single-stage velocity-reduction driving assembly (17). The outer rotor type motor includes a stator assembly (111), a rotor assembly (112) and a housing (113). The rotor assembly is disposed to the housing. The shaft gear includes a joint portion (131) and a gear portion (132). The joint portion is disposed to the housing. The single-stage velocity-reduction driving assembly is configured around the crankshaft and includes a driving gear (171). A central axis (133) of the shaft gear and a central axis (151) of the crankshaft are substantially parallel to each other and non-coaxial, and the driving gear directly meshes with the gear portion. Accordingly, the drivetrain of the electric bike of the present invention has the advantages of easier assembly and having lower cost.

## Description

### BACKGROUND OF THE INVENTION

### CROSS-REFERENCE TO RELATED APPLICATION

This application claims priority to Chinese Patent Application No. 201910144919.0, filed on Feb. 27th, 2019, the content of which is hereby incorporated by reference in their entirety for all purposes.

### Field of the Invention

The present invention relates to a drivetrain. Particularly, the present invention relates to a drivetrain for an electric bike.

### Description of the Related Art

In the modern era, emphasis has been placed on leisure activities as well as sports activities. More and more people have thus considered riding bicycles for both physical exercise and leisure activities. Additionally, due to rising price of petroleum, bicycles have become an increasingly convenient way of transportation.

Electric-power assisted bicycles have become more popular due to the need to reduce the physical load placed upon a rider in riding a bicycle. A typical motor of an electric bike includes a wheel motor disposed on the front or rear wheel, or in some cases, a middle motor disposed on the crankshaft. Since the transmission efficiency of the middle motor is better than that of the wheel motor, development of electric bikes has had more effort put into researches on the middle motor than that of the wheel motor.

The middle motor can be categorized into inner rotor type motors and outer rotor type motors, wherein the rotor of the inner rotor type motor is disposed on the central shaft of the motor and the rotor of the outer rotor type motor is disposed on the housing of the motor. The rotor of the inner rotor type motor rotates together with the central shaft when operating. The rotor of the outer rotor type motor rotates together with the housing when operating. The inner rotor type motor is widely used as a middle motor due to the advantages of having smaller volume and lower weight. However, the torque of an inner rotor type motor is lower than that of an outer rotor type motor.

In the prior art, the middle motor configured on the bike sequentially drives a plurality of velocity reduction gears through the inner rotor type motor to perform a multi-stage deceleration, and then drives the chain wheel to rotate, wherein the central axis of the crankshaft and the central axis of the inner rotor type motor are coaxial. However, the configuration of the plurality of velocity reduction gears for multi-stage deceleration complicates the assembly and increases cost (including: cost of elements, cost of assembly, etc.).

Due to the above-mentioned reasons, the present invention provides a drivetrain for an electric bike to overcome those problems of the prior art.

### SUMMARY OF THE INVENTION

A drivetrain for an electric bike is provided. The drivetrain includes an outer rotor type motor, a shaft gear, a crankshaft and a single-stage velocity-reduction driving assembly. The outer rotor type motor includes a stator assembly, a rotor assembly and a housing. The rotor assembly is disposed to the housing. The shaft gear includes a joint portion and a gear portion. The joint portion is disposed to the housing. The single-stage velocity-reduction driving assembly is configured around the crankshaft and includes a driving gear. A central axis of the shaft gear and a central axis of the crankshaft are substantially parallel to each other and non-coaxial, and the driving gear directly meshes with the gear portion. Accordingly, the drivetrain for the electric bike of the present invention has the advantages of easier assembly and having lower cost.

Next, the driving gear of the present invention may include plastic. Accordingly, the drivetrain for the electric bike of the present invention further has the advantage of having lower weight.

Further, in the present invention, the number of teeth of the driving gear and the number of teeth of the gear portion may be co-prime. Therefore, the driving gear and the gear portion of the present invention are much more durable.

Finally, the drivetrain for the electric bike of the present invention may include a resistance member. The resistance member is disposed corresponding to the crankshaft and hence provides more comfort to the rider.

### BRIEF DESCRIPTION OF THE DRAWINGS

FIG. 1 depicts a drivetrain disposed on an electric bike according to an embodiment of the present invention.
FIG. 2 depicts a cross-sectional view of the drivetrain of FIG. 1 in the direction parallel with the axis of the crankshaft.
FIG. 3 depicts the SSVR driving assembly of FIG. 2.
FIG. 4 depicts the shaft gear of FIG. 2 of the present invention.
FIG. 5 depicts the manner where the driving gear of FIG. 2 of the present invention directly meshes with the gear portion of the shaft gear.
FIG. 6 depicts a driving gear directly meshing with a gear portion of a shaft gear according to another embodiment of the present invention.
FIG. 7 depicts a cross-sectional view of the drivetrain along the crankshaft according to another embodiment of the present invention.
FIG. 8 depicts a cross-sectional view of the drivetrain along the crankshaft according to another embodiment of the present invention.
FIG. 9 depicts a cross-sectional view of the drivetrain along the crankshaft according to an embodiment of the present invention.

### DETAILED DESCRIPTION OF THE PREFERRED EMBODIMENTS

The advantages, features and technical methods of this invention will be described in detail in order to be understood easier. Moreover, the present invention may be realized in different form and should not be limited to the embodiments described here. On the contrary, the provided embodiments make the disclosure more clear and define the scope of this invention entirely and completely. Further, the present invention is only defined according to the attached claims.

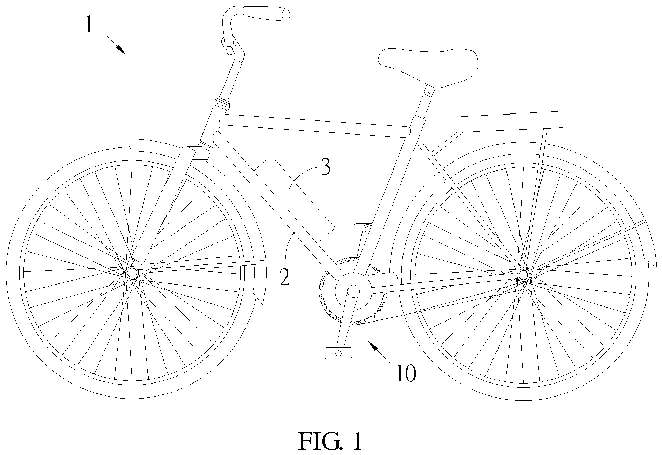

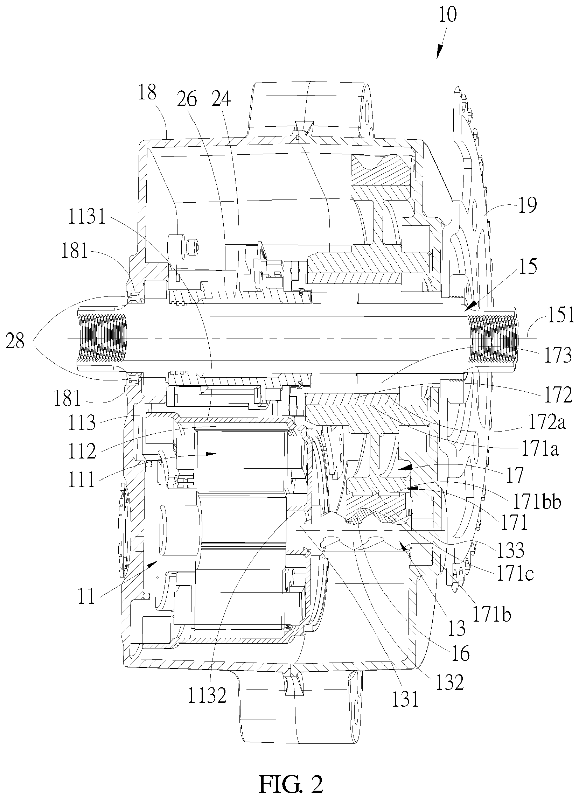

Referring to FIGS. 1 and 2, in which FIG. 1 depicts a drivetrain disposed on an electric bike according to an embodiment of the present invention and FIG. 2 depicts a cross-sectional view of the drivetrain of FIG. 1 in the direction parallel with the axis of the crankshaft. The drivetrain for an electric bike of the present invention is applied to a bike. The battery 3 is disposed on the low tube 2 of the bike 1. The battery 3 supplies power to the drivetrain 10 so as to drive the bike to move, which helps to save physical strength of the rider by reducing the physical load to operate the bike. The electric bike of the present invention is driven through pedaling by the rider with the assistance of electric power, but the present invention is not limited thereto. Additionally, the drivetrain 10 of the present invention may be applied to a bike, but the present invention is not limited thereto. Any case where the drivetrain 10 of the present invention is applied to drive an arbitrary kind of transportation vehicle is in the scope of the present invention.

The drivetrain 10 of an electric bike of the present invention includes the outer rotor type motor 11, the shaft gear 13, the crankshaft 15, the single-stage velocity-reduction driving assembly 17 (hereinafter referred to as the SSVR driving assembly 17) and the case 18. The outer rotor type motor 11 includes the stator assembly 111, the rotor assembly 112 and the housing 113, wherein the rotor assembly 112 is disposed on the interior surface 1131 of the housing 113 and hence makes the housing 113 rotate when rotating around the stator assembly 111. Further, the case 18 is configured to load at least the outer rotor type motor 11, the shaft gear 13, the crankshaft 15 and the SSVR driving assembly 17, wherein the case 18 may include a single case or an assembly of two or more than two cases. The invention is not limited thereto.

The shaft gear 13 includes the joint portion 131 and the gear portion 132, wherein the joint portion 131 is disposed to the housing 113. Further, for the present embodiment, the shaft hole 1132 of the housing 113 is used to accommodate and settle the joint portion 131 so as to rotate the shaft gear 13 when the housing 113 rotates. However, the present invention is not limited thereto. According to an embodiment of the present invention, the joint portion 131 may be disposed to the shaft hole of the housing or one end of the housing, but the invention is not limited thereto. For the present embodiment, a part of the gear portion 132 is disposed inside the housing 113. In addition, the central axis 133 of the shaft gear 13 and the central axis 151 of the crankshaft 15 are substantially parallel to each other and non-coaxial, wherein the term "... substantially parallel with each other and non-coaxial..." means that the central axis 133 of the shaft gear 13 and the central axis 151 of the crankshaft 15 are exactly parallel to each other or the extension lines thereof may cross with a small angle of, for example, 0-10 degrees. However, the present invention is not limited thereto.

The SSVR driving assembly 17 encompasses the crankshaft 15 and includes the driving gear 171, the bearing 172 and the fixing block 173. The drivetrain 10 further includes the chain wheel 19, wherein the shaft hole 171a of the driving gear 171 is used to accommodate and settle the bearing 172, the shaft hole 172a of the bearing 172 is used to accommodate and settle the fixing block 173, and the fixing block 173 is disposed on the chain wheel 19. The driving gear 171 of the SSVR driving assembly 17 directly meshes with the gear portion 132 of the shaft gear 13. Further, the bearing 172 of the present embodiment is a one-way bearing, but the present invention is not limited thereto. In addition, the shaft hole 171a of the driving gear 171 and the spindle hole 172a of the bearing 172 are used to accommodate and settle another element/component such that the driving gear 171 or the bearing 172 is coaxial with the element/component accommodated therein. Taking the present embodiment for example, the driving gear 171, the bearing 172 and the fixing block 173 are coaxial.

In addition, for the convenience of design or manufacturing, the driving gear 171 may include the driving rim 171b and the intermediate ring 171c. The intermediate ring 171c is accommodated and settled in the shaft hole 171bb of the driving rim 171b. In another embodiment of the present invention, the driving gear may include several intermediate components and the driving rim in an integration manner or in a combination manner. However, the present invention is not limited thereto. Besides, the driving gear 171 may be made of plastic. In other embodiments of the present invention, the driving rim is made of plastic and the intermediate ring is made of other materials. However, the present invention is not limited thereto.

The plastic described in the present invention is wear-resistant or has certain wear-resistant materials added thereto such as metal, fiberglass, etc. For example, polyoxymethylene resin (POM, DURACON : M90-44, etc.), Polytetrafluoroethene (PTFE or so-called Teflon), NYLON (M90-44, MC901, MC602ST, etc.) may be used. However, the present invention is not limited thereto. Any plastic which is wear-resistant or has other wear-resistant materials added thereto is in the scope of the plastic described in the present invention.

The drivetrain 10 of the present invention further includes the solid lubricating oil 16. The solid lubricating oil 16 is added between the driving gear 171 and the gear portion 132, wherein the solid lubricating oil 16 may be, for example, grease. However, the present invention is not limited thereto. Any material which is capable of lubricating the metal components and the plastic components is in the scope of the solid lubricating oil 16 described in the present invention.

Since the SSVR driving assembly 17 is applied to the drivetrain 10 of the present invention, there is no need to use several velocity-reduction gears for multi-stage velocity reduction. Therefore, not only is it easier to assemble, but also saves costs (costs of elements, assembly, etc.). In addition, the driving gear 171 of the present invention may be made of plastic, which is lighter than the several velocity-reduction gears constructed of metal components in the prior art. Further, since the materials used to construct the driving gear 171 and the gear portion 132 are different, that is, the driving gear 171 is made of plastic and the gear portion 132 is made of metal, the two different materials may have different hardness. The solid lubricating oil 16 may be applied between the driving gear 171 and the gear portion 132 and there is no need to use complicated oil sealing components. Therefore, the drivetrain 10 of the present invention has the advantages of easier assembly, having lower cost, having lower weight, etc.

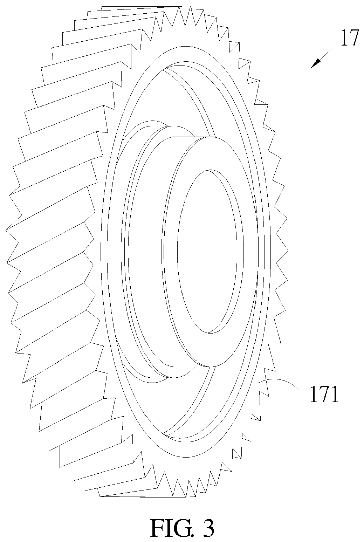

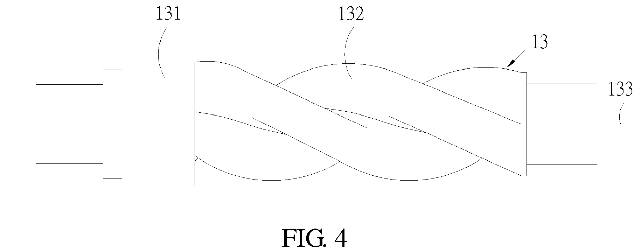

Referring to FIGS. 3 and 4, FIG. 3 depicts the SSVR driving assembly of FIG. 2, and FIG. 4 depicts the shaft gear of FIG. 2 of the present invention. The driving gear 171 of the SSVR driving assembly 17 of the present invention is a bevel gear and the gear portion 132 of the shaft gear 13 is a bevel gear as well. Further, the gear portion 132 is in a screw rotation manner with respect to the central axis 133 of the shaft gear 13. In other words, the gear portion 132 extends in a screw manner along the central axis 133 of the shaft gear 13. The outer rotor type motor applied in the present invention may be models with higher torque. Since the bevel gear provides more area of contact, it is hence suitable for transmitting higher torque. However, the present invention is not limited thereto. Cases having any kind of gear and any tooth shape directly meshing with each other and rotating relatively as the driving gears 171 and 371 and the shaft gear 13 of the present invention are in the scope of the driving gears 171 and 371 and the shaft gear 13 of the present invention.

According to the aspects of the embodiments described in the present invention, the present invention has the advantage of having higher torque due to the outer rotor type motor applied thereto. Further, since the shaft gear 13 and the central shaft of the outer rotor type motor are not formed in an integral whole, there is no need to replace the shaft gear 13 but to replace the outer rotor type motor when the outer rotor type motor is broken or damaged. That is, it is easier to fix or replace the broken or damaged portion. In addition, whereas the outer rotor type motor is slightly larger and heavier, the drivetrain 10 of the present invention still has the advantages of having higher torque provided by the outer rotor type motor, more convenient replacement and maintaining, simpler structure, easier assembly, lower weight, lower cost, etc. through the following schemes. To begin with, the driving gear 171 is made of plastic so as to decrease the weight thereof. Next, the shaft gear 13 directly meshes with the driving gear 171 and the SSVR driving assembly 17 rotates the chain wheel 19, which results in the advantages of having simpler structure, easier assembly, lower weight, etc. Finally, the solid lubricating oil 16 may be applied between the driving gear 171 and the gear portion 132 and there is no need to use complicated oil sealing components, which brings the advantages of easier assembly, having lower cost, having lower weight, etc.

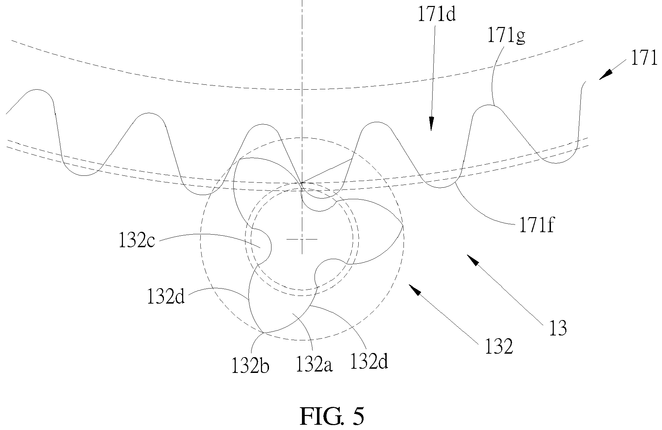

Referring to FIG. 5, which depicts the manner where the driving gear of FIG. 2 of the present invention directly meshes with the gear portion of the shaft gear. The driving gear 171 of the present invention directly meshes with the gear portion 132 of the shaft gear 13, wherein the number of teeth of the gear portion 132 is at least three, such as three, four, five, etc. However, the present invention is not limited thereto. For the present embodiment, preferably, the number of teeth of the gear portion 132 is at least three when the maximum output torsion of the fixing block of the motor is configured at about 35 Nm and the maximum rotational speed is configured to be about 1000 rpm. Besides, the ratio of the number of teeth of the driving gear 171 to that of the gear portion 132 is preferably equal to or more than 15 to 1. However, the present invention is not limited thereto. Since the SSVR driving assembly 17 is applied to the present invention, it is possible that whole volume of the drivetrain 10 is too large due to the far too large volume of the gear when a certain ratio of velocity reduction is desired. Therefore, in order to achieve a certain ratio of velocity reduction and prevent the whole volume from being too large, the gear portion 132 with fewer teeth is preferred. Therefore, in order to provide sufficient strength for driving the driving gear 171 with a minimum number of teeth, the number of teeth of the gear portion 132 of the present invention is three and the gear portion 132 is helical. In other words, the gear portion 132 of the present invention having three teeth is optimal. Besides, if the ratio of the number of teeth of the driving gear 171 and that of the gear portion 132 is equal to or more than 15 to 1, a better ratio of velocity reduction may be provided and the whole volume would be prevented from being too large.

Further, the number of teeth of the driving gear 171 and that of the gear portion 132 are co-prime. That is, the highest common factor of the number of teeth of the driving gear 171 and that of the gear portion 132 is one. The purpose of the above-mentioned design is to reduce wear and tear. In detail, for example, if the driving gear 171 has eight teeth, the gear portion 132 has four teeth, and when the first tooth of the driving gear 171 and the first tooth of the gear portion 132 mesh with each other, the two first teeth would mesh with each other constantly. In this way, once one of the two first teeth is slightly worn or damaged, the wear and tear between the two first teeth may become worse and each of the two first teeth may even be broken. To the contrary, if the numbers of teeth of the driving gear 171 and the gear portion 132 are co-prime, any certain tooth of them will mesh with different teeth so as to reduce the wear and tear. Consequently, according to an embodiment of the present invention, when the number of teeth of the driving gear 171 and that of the gear portion 132 are co-prime, the device may be much more durable.

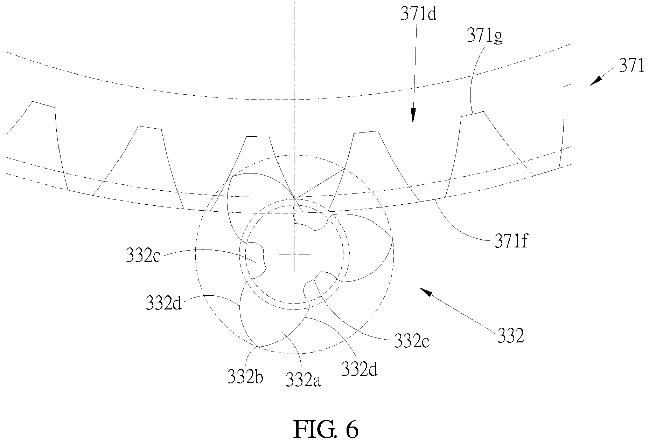

Furthermore, the tooth top 171f and the underside 171g between teeth of the tooth shape 171d of the driving gear 171 are both a circular arc. The underside 132c of the tooth shape 132a of the gear portion 132 is a circular arc as well, while the tooth top 132b of the tooth shape 132a of the gear portion 132 is substantially like a line. In other words, two flanks 132d of each tooth shape 132a are not smoothly coupled such that the tooth top 132b therebetween is substantially an intersection point in the cross-sectional view shown in FIG. 5. Therefore, for the 3D view, the tooth top 132b is substantially like a line. FIG. 6 illustrates another embodiment of the present invention. FIG. 6 depicts a driving gear directly meshing with a gear portion of a shaft gear according to another embodiment of the present invention. The tooth top 371f and underside 371g of the tooth shape 371d of the driving gear 371 are both a circular arc, which are both roughly like a straight line. A square-like groove exists between each pair of two adjacent tooth shapes 332a of the gear portion 332 and the lower surface 332c between each pair of two adjacent tooth shapes 332a is a plane. Further, a protruding part exists in the middle portion 332e of the lower surface 332c between each pair of two adjacent tooth shapes 332a. The tooth top 332b of the tooth shape 332a of the gear portion 332 is substantially like a line. In other words, two flanks 332d of each tooth shape 332a are not smoothly connected such that the tooth top 332b therebetween is substantially an intersection point in the cross-sectional view shown in FIG. 6. Therefore, for the 3D view, the tooth top 332b is substantially like a line.

Please refer to FIG. 2 again. The drivetrain 10 of the present invention further includes a ratchet 24 and a torque sensor 26. The shaft hole 181 of the case 18 is used to accommodate and settle the crankshaft 15. The ratchet 24 is connected to the crankshaft 15. The torque sensor 26 is disposed corresponding to the crankshaft 15. According to the present embodiment, the torque sensor 26 may be disposed on the ratchet 24, but the present invention is not limited thereto. Further, the shaft hole 1132 of the housing 113 and the shaft hole 181 of the case 18 are used to accommodate and settle another element and/or component such that the shaft hole 1132 of the housing 113 and the shaft hole 181 of the case 18 are coaxial. In the present embodiment, the housing 113 and the joint portion 131 are coaxial, and the shaft hole 181 of the case 18 and the crankshaft 15 are coaxial. In the present invention, power propagating from the outer rotor type motor 11 to the chain wheel 19 sequentially propagates along the outer rotor type motor 11, the shaft gear 13, the driving gear 171, the bearing 172, the fixing block 173 and the chain wheel 19. For power propagating from the outer rotor type motor 11 to the chain wheel 19, since the ratchet 24 may only rotate in one direction, the fixing block 173 may not drive the ratchet 24 to rotate and the crankshaft 15 may not be driven to rotate by the ratchet 24. However, since there is still little friction between the fixing block 173 and the ratchet 24, slight rotation of the ratchet 24 may drive the crankshaft 15 to rotate slightly. The main operation mechanism of the electric bike of the present invention is to take advantage of a sensing mechanism via a sensor such as a velocity sensor when a rider pedals. In this way, the outer rotor type motor 11 rotates and indirectly drives the chain wheel 19 to rotate, which is assistant to the rider for riding. However, when the rider stop pedaling, the outer rotor type motor 11 would indirectly drive the crankshaft 15 to slightly rotate due to its inertia, which drives the pedals (as shown in FIG. 1) to slightly rotate and hence cause slight force to the feet of the rider.

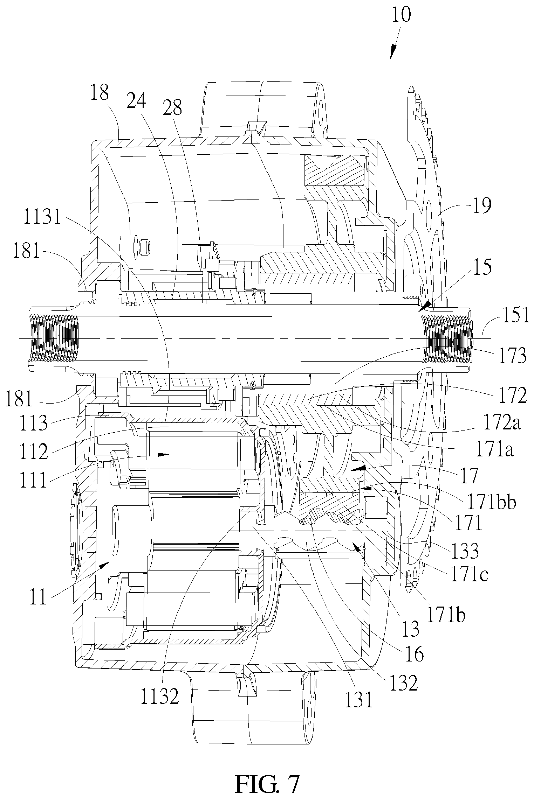

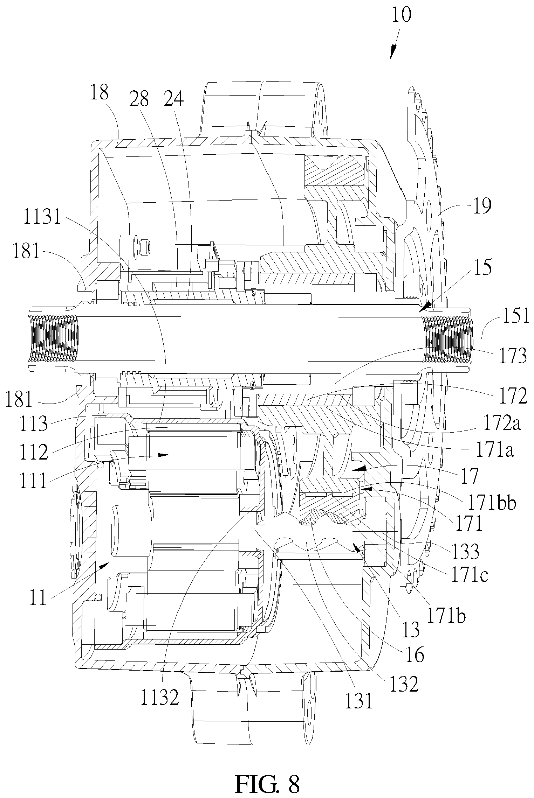

In order to prevent the feet of the rider from being forced to slightly move by the drivetrain 10 when they are supposedly to be still at a certain position, the drivetrain 10 of the present invention further includes a resistance member 28. The resistance member 28 is disposed corresponding to the crankshaft 15 so as to prevent the crankshaft 15 from being slightly driven to move or reduce the degree of movement. In the present embodiment, the resistance member 28 is a contact-type resistance member and may be an O-ring. The O-ring is disposed around the crankshaft 15 and positioned between the shaft hole 181 of the case 18 and the crankshaft 15. For the present embodiment, the force of friction between the O-ring and the crankshaft 15 prevents the crankshaft 15 from being slightly rotated or reduces the degree of rotation and hence improves the goal of preventing the feet of the rider from being driven thereby. Accordingly, more comfort is provided to the rider. Further, another embodiment of the present invention is shown in FIG. 7. FIG. 7 depicts a cross-sectional view of the drivetrain along the crankshaft according to another embodiment of the present invention. The present embodiment is similar to the embodiment of FIG. 2. The main differences therebetween are described below and redundant descriptions of the same or alike features are omitted. The resistance member 28 of the present embodiment is a contact-type resistance member and may be disposed between the ratchet 24 and the crankshaft 15. Further, another embodiment is shown in FIG. 8. FIG. 8 depicts a cross-sectional view of the drivetrain along the crankshaft according to another embodiment of the present invention. The present embodiment is similar to the embodiment of FIG. 2. The main differences therebetween are described below and redundant descriptions of the same or alike features are omitted. In the present embodiment, the resistance member 28 is a non-contact type resistance member. The non-contact type resistance member may be an electro-magnet, wherein the resistance member 28 may be disposed on the ratchet 24. The type, material and manner of installation of the resistance member 28 of the present invention are not limited thereto. Any case where the resistance member 28 is disposed corresponding to the crankshaft 15 so as to prevent the crankshaft 15 from being slightly rotated or reduce the degree of rotation is in the scope of the resistance member 28 of the present invention.

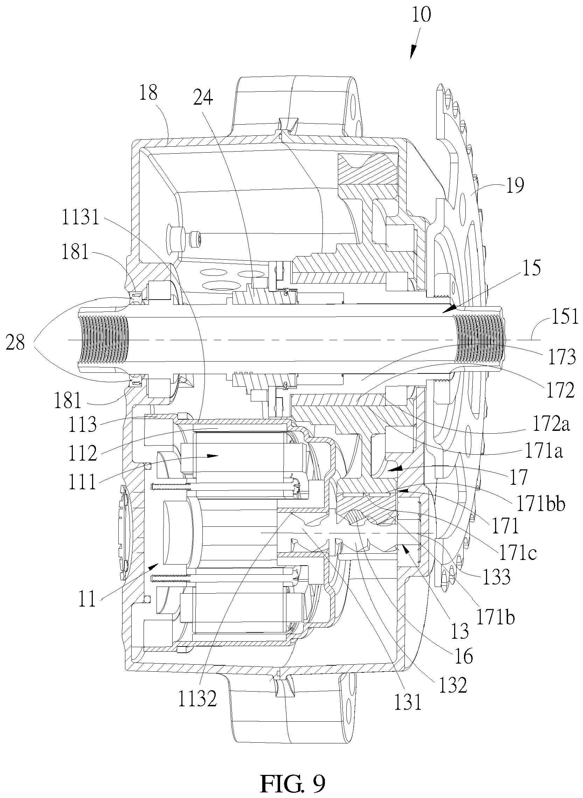

Furthermore, FIG. 9 depicts a cross-sectional view of the drivetrain along the crankshaft according to an embodiment of the present invention. The present embodiment is similar to the embodiment of FIG. 2. The main differences therebetween are described below and redundant descriptions of the same or alike features are omitted. The present embodiment does not have the torque sensor 26 shown in FIG. 2 and the resistance member 28 is a contact-type resistance member, wherein the contact-type resistance member may be an O-ring. The O-ring is disposed around the crankshaft 15 and positioned between the shaft hole 181 of the case and the crankshaft 15. Moreover, in comparison with the embodiment shown in FG. 2, the length of the ratchet 24 used in the present embodiment is shorter. Accordingly, the whole volume of the drivetrain 10 of the present embodiment may be further compressed and hence may be smaller.

The above description is merely illustrative and not restrictive. Any equivalent modification or change without departing from the spirit and scope of the present disclosure should be included in the appended claims.

## Claims

1. A drivetrain (10) for an electric bike (1), **characterized in** comprising:
an outer rotor type motor (11), comprising a stator assembly (111), a rotor assembly (112) and a housing (113), the rotor assembly (112) being disposed to the housing (113);
a shaft gear (13), comprising a joint portion (131) and a gear portion (132), the joint portion (131) being disposed to the housing (113);
a crankshaft (15); and
a single-stage velocity-reduction driving assembly (17), configured around the crankshaft (15), the single-stage velocity-reduction driving assembly (17) comprising a driving gear (171);
wherein a central axis (133) of the shaft gear (13) and a central axis (151) of the crankshaft (15) are substantially parallel to each other and non-coaxial, the driving gear (171) directly meshes with the gear portion (132), and a number of teeth of the driving gear (171) and a number of teeth of the gear portion (132) are co-prime.

2. The drivetrain (10) of claim 1, wherein the driving gear (171) is a bevel gear, the gear portion (132) is a bevel gear, the gear portion (132) is in a screw rotation manner along the central axis (133) of the shaft gear (13), and the driving gear (171) and the gear portion (132) are made of different materials.

3. The drivetrain (10) of any one of the preceding claims, wherein the ratio of a number of teeth of the driving gear (171) to a number of teeth of the gear portion (132) is at least 15 to 1.

4. The drivetrain (10) of any one of the preceding claims, wherein the driving gear (171) is made of plastic.

5. The drivetrain (10) of any one of the preceding claims, further comprising a chain wheel (19) and the single-stage velocity-reduction driving assembly (17) further comprising a bearing (172) and a fixing block (173), wherein a shaft hole of the driving gear (171) is used to accommodate and settle the bearing (172), a shaft hole of the bearing (172) is used to accommodate and settle the fixing block (173), and the fixing block (173) is disposed on the chain wheel (19).

6. The drivetrain (10) of any one of the preceding claims, further comprising a resistance member (28), wherein the resistance member (28) is disposed corresponding to the crankshaft (15).

7. The drivetrain (10) of claim 6, wherein the resistance member (28) is a contact-type resistance member.

8. The drivetrain (10) of claim 7, wherein the contact-type resistance member is an O-ring.

9. The drivetrain (10) of claim 6, wherein the resistance member (28) is a non-contact type resistance member.

10. The drivetrain (10) of claim 9, wherein the non-contact type resistance member is an electro-magnet.

11. The drivetrain (10) of any one of claims 6-10, further comprising a case (18) and a shaft hole (181) of the case (18) is used to accommodate and settle the crankshaft (15), wherein the resistance member (28) is disposed between the shaft hole (181) of the case (18) and the crankshaft (15).

12. The drivetrain (10) of any one of claim 6-10, further comprising a ratchet (24), wherein the ratchet (24) connects to the crankshaft (15) and the resistance member (28) is disposed between the ratchet (24) and the crankshaft (15).

13. The drivetrain (10) of any one of the preceding claims, further comprising a torque sensor (26), wherein the torque sensor (26) is disposed corresponding to the crankshaft (15).

14. The drivetrain (10) of claim 13, further comprising a ratchet (24), wherein the ratchet (24) connects to the crankshaft (15) and the torque sensor (26) is disposed on the ratchet (24).

15. The drivetrain (10) of any one of the preceding claims, further comprises solid lubricating oil (16), wherein the solid lubricating oil (16) is applied between the driving gear (171) and the gear portion (132).
